# EUROPÄISCHE PATENTSCHRIFT

(11) **EP 0 732 491 B1**
(45) Veröffentlichungstag und Bekanntmachung des Hinweises auf die Patenterteilung: **04.09.2002**
(21) Anmeldenummer: 96101640.9
(22) Anmeldetag: 06.02.1996
(51) Int. Cl.: F02D 41/38, F02D 41/10, F02D 31/00

(54) **Regelungsverfahren des Betriebsverhaltens eines Verbrennungsmotors, insbesondere Dieselmotors, eines Kraftfahrzeuges**
Closed loop control method of the operating characteristics of an internal combustion engine, especially diesel, of a vehicle
Méthode de régulation des caractéristiques de fonctionnement d'un moteur à combustion interne, en particulier diesel, d'un véhicule

(30) Priorität: 15.03.1995 DE 19509394
(43) Veröffentlichungstag der Anmeldung: 18.09.1996
(73) Patentinhaber: MAN Nutzfahrzeuge Aktiengesellschaft, 80976 München (DE)
(72) Erfinder: Meyer, Wolfgang, Dipl.-Ing., D-82140 Olching (DE); von Korff, Peter, Dipl.-Ing., D-82266 Buch (DE); Drewitz, Hans, Dipl.-Ing. (FH), D-80797 München (DE)

(56) Entgegenhaltungen:
- FR-A- 2 630 501
- US-A- 3 973 538
- US-A- 4 497 294
- PATENT ABSTRACTS OF JAPAN vol. 012, no. 374 (M-749), 6.Oktober 1988 & JP 63 124842 A (HITACHI LTD), 28.Mai 1988,

## Beschreibung

Die Erfindung betrifft ein Verfahren nach dem Oberbegriff des Anspruches 1.

Aus der DE 36 13 685 C1 ist eine Vorrichtung bekannt, die die ab Nenndrehzahl aufwärts beginnenden Endabregel-Kennlinien eines Reglers einer Dieselbrennkraftmaschine in Abhängigkeit von fahrzeugspezifischen Kenngrößen verringert. Die Haupt-Kenngröße ist der Fahrzeug-Beladungszustand, wobei bei steigender Beladung des Fahrzeuges der Beginn der Abregelung der Dieselmaschine entsprechend höher über der Nenndrehzahl n_{Nenn} liegen darf. Ein Nachteil dieser Erfindung ist, daß unterhalb der Nenndrehzahl des Dieselmotors und bei unbeladenem oder teilbeladenem Fahrzeug bis zur Nenndrehzahl, durch die Vorrichtung unbeeinflußt Vollast bis zur Nenndrehzahl gefahren werden kann. Eine z. B. das akustische Verhalten des Fahrzeuges beeinflussende Wirkung der Vorrichtung im Beschleunigungsverlauf des Fahrzeuges ist dabei nicht vorhanden. Weiterhin sind Sensoren, Meßwertwandler und Leitungen für die Übertragung der Meßwerte für die fahrzeugspezfischen Daten zum Motor teuer und anfällig bzw. wartungsbedürftig.

Eine weitere Vorrichtung dieser Art ist aus der DE 38 28 850 A1 bekannt. Diese Vorrichtung regelt hauptsächlich den Übergangsbereich nach dem Verlassen des Leerlaufzustandes bzw. Schubzustandes in einen anderen Betriebszustand des Verbrennungsmotors. Dabei wird dem Drehzahlverlauf im Leerlaufzustand des Motors eine zeitlich veränderbare Drehzahlbegrenzung außerhalb des Leerlaufzustandes vorgegeben. Die Drehzahlbegrenzung im Leerlaufzustand soll auch dann wirksam sein, wenn ein Fehler durch ein entsprechendes Mittel zur Fehlererkennung erkannt wird. Die Vorrichtung hat die Aufgabe, gezielte Betriebszustands-Übergänge bei Stillstand des Fahrzeuges zu ermöglichen und ein Durchdrehen des Motors bei einem Fehler in der Steuerung zu verhindern.

In der DE 39 28 875 A1 wird eine Vorrichtung beschrieben, die bei einer Dieselbrennkraftmaschine die Kraftstoff-Einspritzmenge in Abhängigkeit des Ist-Wertes des Spritzbeginns regelt. Damit wird ein rauchfreier Betrieb der Dieselbrennkraftmaschine erreicht. Bei dieser Vorrichtung sind mit dem Kraftfahrzeug sportliche Beschleunigungen weiterhin gut möglich, gerade im oberen Drehzahlbereich. Dem Trend für leiseres, niedertouriges Fahren wird hier geradezu entgegengewirkt.

In der EP 0 545 027 A1 wird eine Vorrichtung beschrieben, die, im Sinne einer Minderung der Lärmentwicklung eines Dieselmotors, die maximal möglichen Vollast-Betriebszustände des Motors unter bestimmten fahrzeugspezifischen Kenngrößen beschneidet oder freigibt. Bei Überschreitung eines bestimmten vorgegebenen Beschleunigungsgrenzwertes in Verbindung mit der Getriebeeinstellung und abhängig von bestimmten Geschwindigkeitsbereichen wird auf eine andere, entsprechend reduzierte, vorgegebene Last- und/oder Abregelkennlinie umgeschaltet und vom Rechner benutzt. Die Benutzung anderer Kennlinien muß schnell erfolgen, da sonst die erwünschte akustische Wirkung nicht gegeben ist. Für den Fahrer kann dieses ungleichmäßige Verhalten von Motor und Fahrzeug problematisch sein und zu unvorhersehbaren Reaktionen und Fehlverhalten im Straßenverkehr führen. Für diese Vorrichtung sind mehrere Sensoren für die Erfassung fahrzeugspezifischer Daten erforderlich.

Schließlich ist aus der DE 33 02 845 A1 eine "Anordnung zur Begrenzung der Geräuschemission der Brennkraftmaschine eines Kraftfahrzeuges" bekannt. Mit dieser Anordnung wird, abhängig von Drehzahl- und Drehzahländerungs-Signalen, die Leistung der Brennkraftmaschine gesteuert. Da einer Leistung viele Drehzahlen zugeordnet werden können, kann die Steuerung auch nur "zufällig" funktionieren.

Der Erfindung liegt die Aufgabe zugrunde, ein Verfahren der eingangs genannten Art zu schaffen, mit dem das Betriebsverhalten eines Kraftfahrzeugs an die Betriebsbedingungen für den Einsatz angepaßt werden kann.

Die Aufgabe wird erfindungsgemäß durch die Merkmale des Anspruches 1 gelöst.

Kraftfahrzeuge herkömmlicher Bauart haben bereits mehrere Sensoren eingebaut, so benötigt man fahrzeugseitig z. B. für ABS (automatischer Blockierschutz) Sensoren für die Erfassung der Raddrehzahlen. Dieselben Sensoren werden für ASR (Antriebsschlupfregelung) verwendet. Für die Stellung bzw. den Winkel des Fußgaspedals (Fahrpedal) werden auch Sensoren eingesetzt. Weiterhin sind motorseitig eine Anzahl von Sensoren eingebaut. Drucksensoren werden zur Erfassung des Ladedruckes des Turboladers für die Motoraufladung verwendet. Für die Ermittlung der Motordrehzahl und der Stellung der Kurbelwelle werden Drehzahlsensoren eingebaut. Die Stellung und der Weg der Regelstange der Einspritzpumpe werden durch Weggeber-Sensoren ermittelt. Weitere Meßwertgrößen über Lufttemperatur, Motortemperatur usw. werden ebenfalls von Sensoren erfaßt. Diese peripheren Parameter bzw. deren sensorische Werte werden in einem Rechner verarbeitet und dessen Ausgabewerte dienen für z. B. die Steuerung des Dieselmotors für einen möglichst partikelarmen, instationären oder stationären Betrieb. Die Vollastlinie ist dabei die obere Grenze der Drehmoment- bzw. Leistungsabgabe im stationären Betrieb.

Durch die erfindungsgemäße Regelung der Einspritzmenge, zusätzlich in Abhängigkeit der Beschleunigung, wird erreicht, daß direkt auf die Drehzahlbeschleunigung des Dieselmotors und damit auch auf die Fahrzeugbeschleunigung Einfluß genommen werden kann.

Durch die Begrenzung des Beschleunigungsverhaltens der Motordrehzahl und damit auch des Fahrzeuges kann erreicht werden, daß in allen Betriebszuständen ausreichendes Beschleunigungsverhalten gegeben ist. Vornehmlich bei einem leeren oder teilbeladenen Lastkraftwagen kann, mit dieser zusätzlichen Regelung, der oft sehr hohe Leistungsüberschuß des Dieselmotors gewollt nicht genutzt werden. In diesem Fall kann auch die Nenn- und Abregeldrehzahl reduziert sein, abhängig davon, ob das Erreichen der Drehzahl- oder Fahrzeug-Beschleunigungsgrenze vorliegt oder nicht. Ein Durchdrehen der Räder oder ein großer Schlupf derselben sowie höhere Partikel- und Schallemissionen und höherer Verbrauch werden damit vermieden.

Bei vollbeladenem oder annähernd vollbeladenem Fahrzeug, bei dem im Beschleunigungsfalle viel Leistung benötigt wird, wird diese auch freigegeben, da die vorgegebenen Drehzahlbeschleunigungswerte bzw. Fahrzeugbeschleunigungswerte nicht erreicht werden.

Für das Zwischengasgeben zum Schalten des Getriebes, das einen schnellen Motorhochlauf, z. B. an Steigungen erfordert, wird erfindungsgemäß die Begrenzung der lastfreien Motodrehzahlbeschleunigung freigegeben. Ein Signal für die Freigabe der Motordrehzahlbeschleunigung bei Fahrt kann z. B. sein, daß das Fahrzeug entweder fährt, oder kein Gang eingelegt ist, oder daß die Kupplung betätigt ist. Ansonsten, z. B. bei stehendem Fahrzeug, gilt die Begrenzung der Motordrehzahlbeschleunigung, wobei auch in diesem Fall die Abregeldrehzahl reduziert sein kann.

In allen diesen Betriebsweisen des Fahrzeuges zeigt sich der Vorteil dieser Erfindung, daß für den Fahrer das Verhalten des Fahrzeuges berechenbar, abschätzbar, gleichmäßig und nicht ungewöhnlich ist. Es sind auch nicht bestimmte Geschwindigkeitsbereiche des Fahrzeugs oder bestimmte Getriebegänge von Leistungsbeschränkungen betroffen, während außerhalb dieser Leistungsbeschränkungen die volle Motorleistung auch bei leerem Fahrzeug zur Verfügung steht, wie dies in der DE 41 38 336 A1 offenbart ist. Ein Fehlverhalten des Fahrers aufgrund eines ungewöhnlichen Fahrzeugverhaltens ist daher mit dem erfindungsgemäßen Verfahren nicht gegeben.

Bei Fahrzeugen bzw. Motoren, die die EDE haben, ist das maximal mögliche Beschleunigungsverhalten durch betriebsspezifische Größen, wie Ladedruck durch den Turbolader, Motordrehzahl, Vollastkennlinie usw. vorgegeben. Aus diesem Verhalten ergeben sich gedachte, maximal mögliche Beschleunigungs-/Drehzahlkurven, je nach eingelegtem Getriebegang, dem Fahrzeuggewicht, betriebsspezifischen Größen und Übertragsungsmechanismen. Dem Beschleunigungsverhalten des Fahrzeugs und des Motors sind somit viele Beschränkungen durch Randbedingungen auferlegt, die im weiteren Text "periphere Regelungsmechanismen" genannt werden. Trotz dieser peripheren Regelungsmechanismen ist das mögliche Beschleunigungsverhalten bei nicht beladenem Fahrzeug und den hohen Motorleistungen noch hoch.

In vorteilhafter Ausgestaltung der Erfindung wird eine Motordrehzahlbeschleunigungs-Sollwertkurve in Abhängigkeit der Drehzahl in die EDE oder einem der EDE zugeordneten Rechner eingegeben, welche das maximal mögliche Beschleunigungsverhalten des Fahrzeugs bestimmt. Eine solche Kurve, die eine geringere maximale Beschleunigung zuläßt, als die aus den peripheren Regelungsmechanismen, wird zunächst abgeschätzt und mit dem unbeladenen Fahrzeug in bezug auf Fahrbarkeit im Test und im Straßenverkehr bewertet. Aus der Modifizierung dieser Kurve erhält man eine Kurve, mit der das Fahrzeug im unbeladenen Zustand gut fahrbar ist. Danach wird die Fahrbarkeit des beladenen Fahrzeugs mit der neuesten Beschleunigungs-Sollwertkurve geprüft, bewertet und die Beschleunigungs-Sollwertkurve evtl. nochmals gering verändert. Die optimierte Motordrehzahlbeschleunigungs-/Drehzahlkurve dient als Sollwertkurve, die in die EDE eingegeben wird und das Drehzahlbeschleunigungsverhalten des Dieselmotors mit seinen peripheren Regelungsmechanismen dann einschränkt, wenn die Sollwertkurve überschritten wird. Die Sollwertkurve gilt mindestens für die entsprechende Fahrzeugund Motorbaureihe, auch wenn die Motoren verschiedene Nennleistungen haben. Ein weiterer Vorteil dieses erfindungsgemäßen Verfahrens ist, daß z. B. Fahrzeuggewicht oder Steigungen nicht über Sensoren bestimmt werden müssen, vielmehr werden der Gewichts- bzw. Beladungszustand und Steigungen über das geregelte Beschleunigungsverhalten indirekt berücksichtigt. Bei stehendem Fahrzeug gilt selbstverständlich die in die EDE eingegebene Motordrehzahlbeschleunigungs-/Drehzahlkennlinie.

Anstelle der Drehzahlbeschleunigungskurve kann auch eine maximal mögliche Fahrzeugbeschleunigungskurve eingegeben werden, die dann jedoch die entsprechenden Signale, wie z. B. momentane Fahrzeugbeschleunigung und Fahrzeuggeschwindigkeit, benötigt.

Der Einfachheit halber wird im folgenden das Beschleunigungsverhalten im Zusammenhang mit der Motordrehzahlbeschleunigung beschrieben. Die Zusammenhänge sind entsprechend auf die Fahrzeugbeschleunigung übertragbar.

Eine vorteilhafte Regelung der Motordrehzahlbeschleunigung besteht darin, daß das Maß der Überschreitung der eingegebenen Motordrehzahlbeschleunigungs-Sollwertkurve ein Maß für die Treibstoffübermengereduzierung ist. Durch die Reduzierung der Treibstoffübermenge wird erreicht, daß die vorgegebene Drehzahlbeschleunigungs-Sollwertkurve schnell wieder erreicht bzw. unterschritten wird. Bei Unterschreitung der Drehzahlbeschleunigungs-Sollwertkurve wird die Treibstoffzumessung wieder entsprechend freigegeben, d. h. die Treibstoffzumessung erfolgt nach den ursprünglichen peripheren Regelungsmechanismen, bis die in die EDE eingegebene Motordrehzahlbeschleunigungs-Sollwertkurve wieder überschritten wird. Der Übergang des Betriebszustandes des Motors von den peripheren Regelungsmechanismen zu der Motordrehzahlbeschleunigungsregelung und umgekehrt soll über Rampen verlaufen, die einen weichen Übergang sicherstellen. Zur Bestimmung der Einspritzmenge wird erfindungsgemäß das Maß der Beschleunigungsüberschreitung aus der in der EDE abgelegten Motordrehzahlbeschleunigungs-Sollwertkurve bestimmt und die Treibstoffübermenge entsprechend einer Funktion der Beschleunigungsüberschreitung festgestellt. Die festgestellte Treibstoffübermenge wird nun durch ein Korrekturmaß, das aus einer erfindungsgemäßen Treibstoffübermenge-Korrekturkurve bestimmt wird, reduziert. Für die folgenden Einspritzvorgänge wird nun die reduzierte Treibstoffmenge zur Einspritzung freigegeben, bis ein neuer Wert der Überschreitung der Motordrehzahlbeschleunigungs-Sollwertkurve vorliegt. Der Verlauf der Treibstoffübermenge-Korrekturkurve bestimmt ganz wesentlich den Verlauf des Einpendelverhaltens des Ist-Beschleunigungsverlaufes an den Sollwert-Verlauf und damit das Fahrverhalten des Fahrzeugs und den Motorhochlauf. Wird die Motordrehzahlbeschleunigungs-Sollwertkurve nicht erreicht, dann wirkt auch die Regelung nicht und die Treibstoffzumessung erfolgt nach den peripheren Regelungsmechanismen.

Die Zeichnungen zeigen schematisch:
- Fig. 1: ein Drehmoment-/Drehzahl-Diagramm,
- Fig. 2: ein Beschleunigungs-/Drehzahl-Diagramm,
- Fig. 3: ein Motordrehzahlbeschleunigungs-/Drehzahl-Diagramm,
- Fig. 4: ein Beschleunigungs-/Drehzahl-Diagramm und
- Fig. 5: ein Treibstoffübermenge-/Beschleunigungsüberhang-Diagramm.

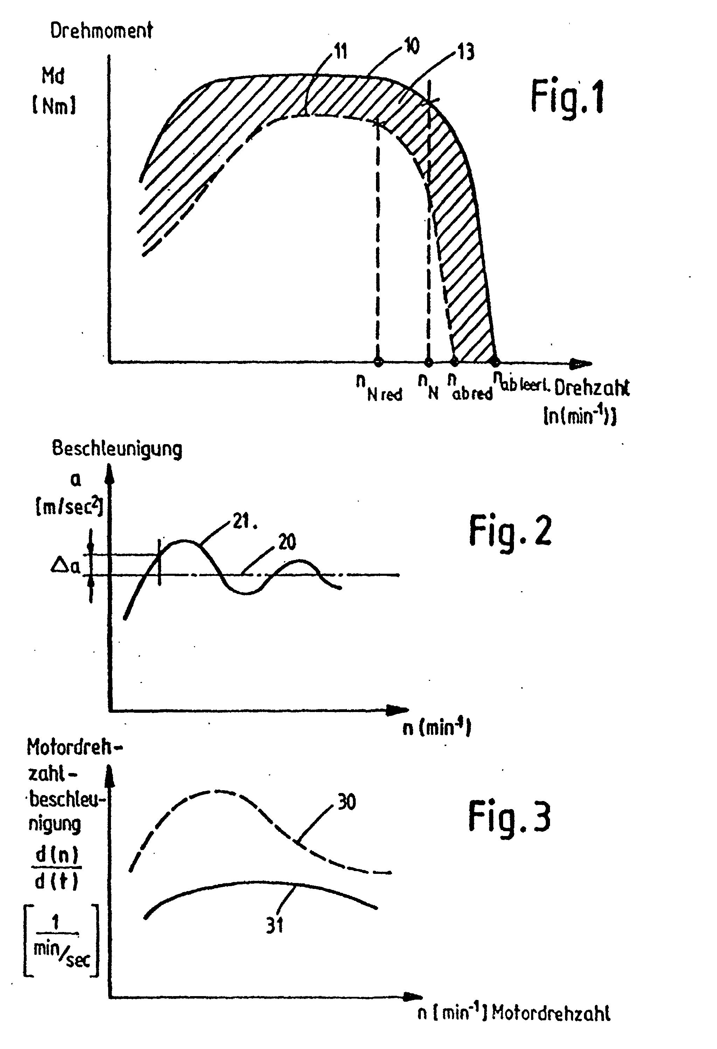

Das Diagramm der Fig. 1 zeigt mehrere Drehmoment-/Drehzahlkurven. Die Vollastlinie 10 ist die herkömmliche Auslegungslinie mit der Nennleistung bei n_{N} und der Leerlaufabregeldrehzahl n_{ab Leerlauf} und der Regelung des Dieselmotors mit vorgegebenen peripheren Regelungsmechanismen. Die Vollastlinie ist eine starre Begrenzungskurve, die der Dieselmotor bei quasistationären und stationären Betriebsbedingungen erreichen kann. Die Lastlinie 11 ist eine dynamische, gedachte Kurve, die sich als reduzierte Lastlinie ergibt, wenn die erfindungsgemäße Regelung der Fahrzeug- bzw. der Motordrehzahlbeschleunigung stattfindet, wobei geringere Beschleunigungswerte bzw. Beschleunigungskurven mit geringeren Werten in die EDE eingegeben werden, als dies infolge der Regelung des Dieselmotors durch die vorgegebenen peripheren Regelungsmechanismen erreichbar ist. Der Bereich 13 ist der nicht nutzbare Leistungsbereich, wenn die vorgegebene Beschleunigungsgrenze überschritten wird.

Das Diagramm der Fig. 2 zeigt beispielhaft, wie bei fahrzeugseitiger Sensierung eine Beschleunigungskurve 20 als Sollwertkurve in die EDE eingegeben werden kann. Die Abszisse kann z. B. die Raddrehzahl n sein. Die Kurve 21 zeigt das tatsächliche Beschleunigungsverhalten des Fahrzeugs, das sich um den Sollwert einpendelt.

Wird die Kurve 20 überschritten, so wird der Beschleunigungsüberhang Δa bestimmt. Die Treibstoffübermenge ΔB wird nach Kurve 51 bzw. als Funktion des Beschleunigungsüberhanges Δa bestimmt und aus der Treibstoffübermenge-Korrekturkurve 52 der Korrekturwert 54 ermittelt. Der Korrekturwert 54 wird nun von der Treibstoffübermenge 53 abgezogen und die korrigierte Treibstoffmenge zur Einspritzung freigegeben. Dieser Vorgang wiederholt sich solange, bis die Kurve 21 wieder unter den Sollwert 20 fällt. Wenn die Kurve 21 unter dem Sollwert 20 ist, so wird maximal die Einspritzmenge freigegeben, die dem Dieselmotor unter den peripheren Regelungsmechanismen, wie z. B. Ladedruck, Fahrpedalstellung usw., zugemessen werden kann.

Das Diagramm der Fig. 3 zeigt mehrere Motordrehzahlbeschleunigungs-/Drehzahlkurven bei motorseitiger Sensierung. Die Kurve 30 ist eine gedachte Motordrehzahlbeschleunigungskurve, die sich aus den peripheren Regelungsmechanismen und peripheren Grenzwertvorgaben (periphere Regelungsmechanismen) ergibt. Diese sind z. B. Ladedruck durch den Turbolader, Einspritzmenge, Drehzahl, Gaspedalstellung, Übertragungsverhalten von Gaspedal zur Regelstange usw. Die erfindungsgemäße Motordrehzahlbeschleunigungskurve 31 ist die Sollwertkurve für die Eingabe in die EDE. Die Kurve 31 wird aus Fahrversuchen ermittelt. Bei Überschreitung der Kurve 31 wird die Treibstoffzumessung geregelt, wie dies in der Beschreibung der Fig. 2 erfolgt ist.

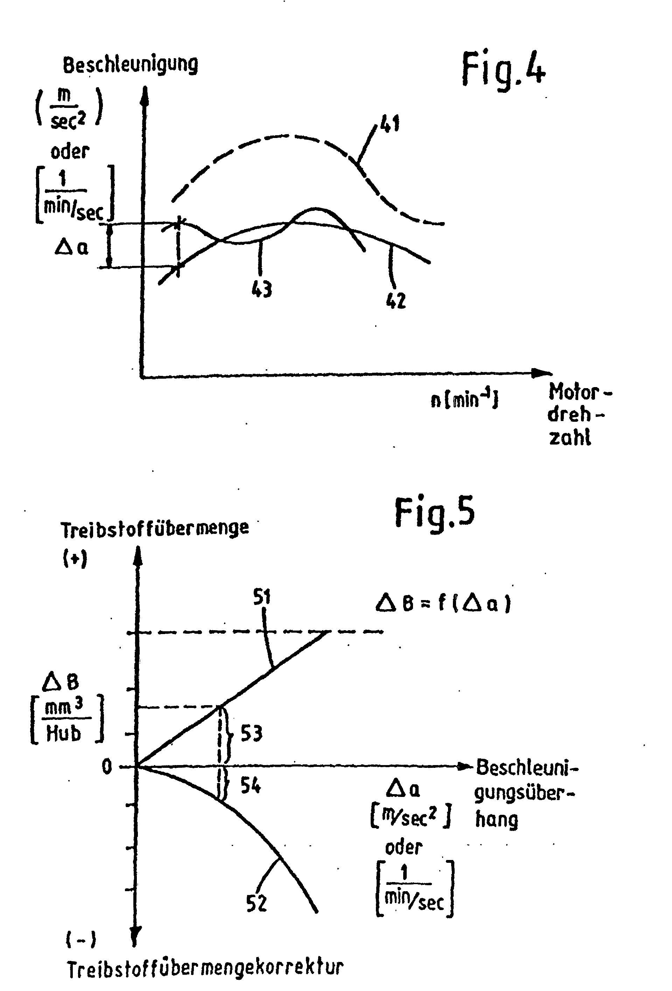

Das Diagramm der Fig. 4 zeigt das Regelungsverhalten der Beschleunigung 43, wenn die Beschleunigungs-Sollwertkurve 20 in Fig. 2 oder die Beschleunigungs-Sollwertkurve 31 in Fig. 3 überschritten wird. Wenn die vorgegebene Beschleunigungs-Sollwertkurve 42 z. B. mit dem Wert Δa überschritten wird, dann wird die Einspritzmenge so lange reduziert, bis die Ist-Kurve 43 wieder unter die Sollwertkurve 42 fällt. Wenn die Ist-Kurve 43 unter der Sollwertkurve 42 liegt, kann die entsprechende Treibstoffmenge nach den peripheren Regelungsmechanismen des Dieselmotors freigegeben werden, so lange, bis die Beschleunigungs-Sollwertkurve 20 in Fig. 2 bzw. die Beschleunigungs-Sollwertkurve 31 in Fig. 3 wieder überschritten wird. Die Beschleunigungs-Sollwertkurve 42 ist in der EDE abgespeichert und dient der Ermittlung des Beschleunigungsüberhanges Δa.

Das Diagramm der Fig. 5 zeigt die Kurven für die Regelung der Treibstoffmenge. Nach der Bestimmung des Beschleunigungsüberhanges Δa wird in Fig. 5, in der die Treibstoffübermenge als Funktion des Beschleunigungsüberhanges als Kurve 51 dargestellt ist, die Treibstoffübermenge 53 bestimmt. Von der Treibstoffübermenge wird nun eine entsprechende Korrekturmenge 54, die aus der Kurve 52 ermittelt wird, abgezogen und die korrigierte Treibstoffübermenge bei der nächsten Treibstoffzumessung freigegeben. Dieser Vorgang wiederholt sich so lange, bis die Beschleunigungs-Sollwertkurve 42 in Fig. 4 bzw. Kurve 31 in Fig. 3 bzw. 20 in Fig. 2 wieder unterschritten wird. Ist dieses der Fall, so kann die Treibstoffmenge freigegeben werden, die aus den peripheren Regelungsmechanismen möglich ist. Die Korrekturkurve 52 beeinflußt ganz wesentlich das instationäre Drehzahlverhalten und das Einpendelverhalten der Beschleunigungs-Istwertkurve auf die Beschleunigungs-Sollwertkurve und muß deshalb im Fahrversuch sorgfältig ermittelt werden.

## Patentansprüche

1. Verfahren zur Regelung des Betriebsverhaltens eines Dieselmotors eines Kraftfahrzeuges, unter Anwendung einer elektronischen Diesel-Einspritzregelung (EDE), bei der die maximale Einspritzmenge in Abhängigkeit von unter anderem der Drehzahl des Motors und weiteren Betriebsparametern geregelt wird, **dadurch gekennzeichnet, dass** eine aus Betriebsparametern berechnete Einspritzmenge zusätzlich in Abhängigkeit der Beschleunigung (20, 31, 42) geregelt wird, derart, dass bei Überschreiten einer maximal zulässigen Beschleunigungs-Sollwertkurve (20, 31, 42) eine Treibstoffübermenge (ΔB, 53), die einem Beschleunigungsüberhang (Δa), dem Unterschied zwischen IST- und SOLL- Beschleunigung zugeordnet ist, um einen Korrekturwert, der sich aus einer aus Fahrversuchen ermittelten progressiven Kurve (52) aus Beschleunigungsüberhang (Δa) und einer Treibstoffübermengekorrektur (-ΔB, 54) ergibt, reduziert wird, so dass die maximal zulässige Beschleunigungs-Sollwertkurve (20, 31, 42) möglichst eingehalten wird.

2. Verfahren nach Anspruch 1, **dadurch gekennzeichnet, dass** aus der Fahrbarkeit und dem Geräuschverhalten des Kraftfahrzeuges eine empirische Kurve der Beschleunigung (20, 31, 42) in Abhängigkeit von der Drehzahl ermittelt wird, die bei Überschreitung mittels der elektronischen Einspritzregelung (EDE) möglichst eingehalten werden soll.

3. Verfahren nach Anspruch 1, **dadurch gekennzeichnet, dass** bei fahrendem Fahrzeug und geöffneter Kupplung zwischen Motor und Getriebe ein schneller Motorhochlauf möglich ist, so wie ihn die elektronische Diesel-Einspritzregelung (EDE) erlaubt und ohne dass die Einspritzmenge zusätzlich in Abhängigkeit der Beschleunigung (20, 31, 42) geregelt wird.

## Claims

1. A method for controlling the operating behaviour of a diesel engine of a motor vehicle, using an electronic diesel injection control (EDE), wherein the maximum injection quantity is controlled in dependence on, among other things, the engine revs and other operating parameters, **characterised in that** an injection quantity calculated from operating parameters is controlled in addition in dependence on the acceleration (20, 31, 42) in such a way that, when a maximum permissible ideal acceleration value curve (20, 31, 42) is exceeded, an excess fuel quantity (ΔB, 53) which is associated with a surplus acceleration (Δa), the difference between the actual and the ideal acceleration, is reduced by a correction value which results from a progressive curve (52), ascertained from road tests, of the surplus acceleration (Δa) and an excess fuel quantity correction (-ΔB, 54), so that the maximum permissible ideal acceleration value curve (20, 31, 42) is adhered to as much as possible.

2. A method according to Claim 1, **characterised in that** from the drivability and the noise behaviour of the motor vehicle an empirical curve of the acceleration (20, 31, 42) is obtained in dependence on the revs which, in the event of the said curve being exceeded, is to be adhered to as much as possible by means of the electronic injection control (EDE).

3. A method according to Claim 1, **characterised in that**, while the vehicle is moving and the clutch between the engine and the gearbox is disengaged, rapid engine acceleration is possible, as permitted by the electronic diesel injection control (EDE) and without the injection quantity being controlled in addition in dependence on the acceleration (20, 31, 42).

## Revendications

1. Procédé de régulation du comportement de fonctionnement d'un moteur diesel d'un véhicule automobile, utilisant une commande électronique d'injection diesel pour laquelle la quantité maximale injectée est régulée en fonction entre autres du régime du moteur et d'autres paramètres de fonctionnement,
**caractérisé en ce qu'**
on régule une quantité injectée calculée à partir des paramètres de fonctionnement en plus en fonction de l'accélération (20, 31, 42) de façon qu'en cas de dépassement d'une courbe de valeur de consigne d'accélération (20, 31, 42) maximale autorisée, on réduit une quantité excédentaire de carburant (ΔB, 53) associée à un dépassement d'accélération (Δa) c'est-à-dire à la différence entre l'accélération réelle et l'accélération de consigne, et qui résulte d'une courbe progressive (52) obtenue par des essais de conduite à partir du dépassement d'accélération (Δa) et d'une correction d'excédent de carburant (-ΔB, 54), de façon à respecter autant que possible la courbe de valeur de consigne d'accélération maximale autorisée (20, 31, 42).

2. Procédé selon la revendication 1,
**caractérisé en ce qu'**
à partir de la possibilité de roulement et du comportement sonore du véhicule, on détermine une courbe empirique de l'accélération (20, 31, 42) en fonction du régime, qui devra autant que possible en cas de dépassement être respectée par la commande électronique d'injection.

3. Procédé selon la revendication 1,
**caractérisé en ce que**
pour un véhicule en mouvement et un embrayage ouvert entre le moteur et la boîte de vitesses, une montée rapide en régime est possible dans le cadre autorisé par la commande électronique d'injection du moteur diesel et sans réguler en plus la quantité injectée en fonction de l'accélération (20, 31, 42).
